# EUROPÄISCHE PATENTSCHRIFT

(11) **EP 3 848 727 B1**
(45) Veröffentlichungstag und Bekanntmachung des Hinweises auf die Patenterteilung: **29.12.2021**
(21) Anmeldenummer: 21150210.9
(22) Anmeldetag: 05.01.2021
(51) Int. Cl.: G01S 17/10, G01S 13/10, G01S 7/292, G01S 7/4865

(54) **SENSOR UND VERFAHREN ZUR BESTIMMUNG EINER ENTFERNUNG**
SENSOR AND METHOD FOR DETERMINING A DISTANCE
CAPTEUR ET PROCÉDÉ DE DÉTERMINATION D'UNE DISTANCE

(30) Priorität: 10.01.2020 DE 102020100451
(43) Veröffentlichungstag der Anmeldung: 14.07.2021
(73) Patentinhaber: SICK AG, 79183 Waldkirch (DE)
(72) Erfinder: Baldischweiler, Boris, 79194 Gundelfingen (DE)

(56) Entgegenhaltungen:
- US-A- 4 518 256
- US-A1- 2007 002 307
- US-B1- 9 606 228

## Beschreibung

Die Erfindung betrifft einen Sensor und ein Verfahren zur Bestimmung einer Entfernung nach dem Oberbegriff von Anspruch 1 beziehungsweise 12.

Eine Entfernungsmessung nach dem Laufzeitprinzip (TOF, Time-of-Flight) ist für diverse Signale bekannt, etwa Mikrowellen, Licht oder Ultraschall. Speziell für optische Abstandsmessung gibt es viele Sensortypen, wie einstrahlige Entfernungsmesser, Laserscanner oder TOF-3D-Kameras. Solche Sensoren können beispielsweise in der Fahrzeugsicherheit, der Logistik- oder Fabrikautomatisierung eingesetzt werden. Ein besonderes Anwendungsgebiet ist die Sicherheitstechnik, wo der Sensor die Umgebung einer Gefahrenquelle überwacht und bei Detektion eines unzulässigen Objekts eine Sicherungsmaßnahme einleitet, beispielsweise einen Notstopp.

Die Erfassung eines mit Lichtgeschwindigkeit propagierenden Signals stellt sehr hohe Anforderungen an die Hardware. Soll die Auflösung der Entfernungsmessung eine Genauigkeit auch nur im Bereich einiger zehn Millimeter erreichen, so muss die Signallaufzeit schon in einer Größenordnung von hundert Pikosekunden genau bestimmt werden.

Üblicherweise basiert die Zeitmessung auf einem Time-to-Digital Converter (TDC), der praktisch als Stoppuhr fungiert, um die Zeitspanne zwischen einem Sende- und einem Empfangszeitpunkt zu messen. Eine relativ einfache Zeitmessung lässt sich bereits durch einen Zähler mit einem Referenztakt realisieren. Für feine Zeitauflösungen ist das nicht mehr möglich, denn beispielsweise bedeutet eine Auflösung von 100 ps bereits einen Takt von 10 GHz. Daher wird dann das Signal in weiteren Stufen verfeinert und die Grundgenauigkeit des Zählers über Taktverzögerungsverfahren erhöht. Solche TDCs werden dann komplex und benötigen aufwändige Strukturen. Weitere Details zu TDCs finden sich beispielsweise in Henzler, Stephan. "Time-to-digital converters." Vol. 29. Springer Science & Business Media, 2010 oder dem Jahresbericht 2015 der Gruppe Circuits and Systems der Universät Oulu von J. Kostamovaara und T. Rahkonen.

Eine weitere, analoge Zeitmessung basiert darauf, einen Kondensator ab einem Startsignal mit einem definierten Strom zu laden, den Ladevorgang mit einem Stoppsignal zu beenden und die Kondensatorspannung auszulesen. Bei einem derartigen analogen Verfahren ist es sehr schwierig, die Bauteileigenschaften und Umgebungseinflüsse so zu beherrschen, dass tatsächlich eine extrem hohe Messgenauigkeit erreicht werden kann.

Ein anderer herkömmlicher Ansatz zur Laufzeitmessung verwendet sogenannte Tapped Delay Lines (TDL). Das sind digitale Verzögerungsstrukturen (Delay Lines), die aus einer vielfachen Wiederholung einer einfachen Logikschaltung bestehen. In einem Register parallel zu den Verzögerungselementen erzeugt der Sendepuls solange Einsen, wie ein Enable-Signal anliegt, das mit dem Empfangspuls endet. Die gesuchte Laufzeit entspricht damit der Lage des Umbruchs von Eins auf Null in dem Register. Derartige entfernungsmessende Sensoren werden beispielsweise in DE 10 2015 103 472 A1 und EP 3 502 734 A1 vorgestellt. Die Implementierung, vorzugsweise auf einem programmierbaren Baustein wie einem FPGA (Field Programmable Gate Array), ist immer noch verhältnismäßig aufwändig. Außerdem ist die Zeitauflösung auf diejenige der Verzögerungselemente begrenzt, so dass für sehr hohe Messgenauigkeit sehr lange TDLs und damit wiederum komplexe Strukturen erforderlich sind. US 4 518 256 A beschreibt eine Entfernungsbestimmung unter Verwendung von einem Kreuzkorrelationsprozessor, wobei der Kreuzkorrelationsprozessor mehrere gegenläufig ausgerichteten Verzögerungsleitungen umfasst.

Es ist daher Aufgabe der Erfindung, die Bestimmung einer Laufzeit zu verbessern.

Diese Aufgabe wird durch einen Sensor und ein Verfahren zur Bestimmung einer Entfernung nach Anspruch 1 beziehungsweise 12 gelöst. Der Sensor arbeitet mit einem pulsbasierten Laufzeitverfahren, bei dem ein Signalpuls ausgesandt und wieder empfangen wird. Als Sende- und Empfangspuls werden die elektronischen Äquivalente zu dem Signalpuls auf der Messstrecke bezeichnet. Ein Zeitversatz zwischen den elektronischen Pulsen und den Signalpulsen kann durch Referenzmessung beziehungsweise Kalibration kompensiert werden. Eine Laufzeitmesseinheit bestimmt die Laufzeit zwischen Sendepuls und Empfangspuls, die wiederum über die Lichtgeschwindigkeit, genaugenommen wegen des Hin- und Rückwegs des Signalpulses die halbe Lichtgeschwindigkeit, in die gesuchte Entfernung umgerechnet werden kann. Die Laufzeitmesseinheit weist eine Verzögerungsleitung mit einer Vielzahl von in Reihe geschalteten Verzögerungselementen auf. Die jeweilige Verbindung zwischen zwei Verzögerungselementen wird als Knotenpunkt bezeichnet. Die Verzögerungselemente sind vorzugsweise untereinander gleichartig oder bewirken zumindest die gleiche Verzögerung, aber eine notwendige Voraussetzung ist beides nicht.

Die Erfindung geht von dem Grundgedanken aus, die Verzögerungsleitung von beiden Seiten her mit dem Sendepuls beziehungsweise dem Empfangspuls zu speisen. Somit laufen Sendepuls und Empfangspuls in der Verzögerungsleitung aufeinander zu, und an einer bestimmten Position in der Verzögerungsleitung überlagern sie einander. An dem dieser Position entsprechenden Knotenpunkt ist deshalb die Signalamplitude größer als sowohl Sendepuls als auch Empfangspuls, woran der Knotenpunkt erkannt werden kann. Die Lage dieses Knotenpunktes innerhalb der Verzögerungsleitung zeigt an, wie weit der Sendepuls laufen konnte, ehe es zu der Überlagerung kommt, und das ist proportional zu der gesuchten Laufzeit. Es ist denkbar, dass die Überlagerung zwei oder noch mehr benachbarte Knotenpunkte betrifft, wenn der Sendepuls und in Folge auch der Empfangspuls eine entsprechend große Pulsbreite aufweisen.

Die Erfindung hat den Vorteil, dass eine sehr einfache und zugleich robuste Messung von Laufzeiten ermöglicht wird. Abgesehen von der Pulserzeugung werden keine aktiven Bauteile benötigt, und damit wird die Zeitmessung auf eine besonders kostengünstige Weise gelöst. Die erfindungsgemäße Verzögerungsleitung samt Schaltungselementen zur Erfassung der Überlagerung kann integriert werden. Ein einfacher kleiner Mikrocontroller insbesondere mit integriertem AD-Wandler genügt für die weitere Auswertung, es wird beispielsweise kein FPGA benötigt, obwohl natürlich keine technischen Hinderungsgründe einer Implementierung mittels aufwändigerer Digitalbausteine entgegenstehen.

Der Sensor ist bevorzugt als optoelektronischer Sensor ausgebildet, wobei der Sender ein Lichtsender, der Empfänger ein Lichtempfänger und der Signalpuls ein Lichtpuls ist. Die Entfernung wird somit optisch in einem Lichtlaufzeitverfahren gemessen.

Die Laufzeitmesseinheit ist bevorzugt dafür ausgebildet, Sendepuls und Empfangspuls auf eine gleiche Amplitude zu normieren. Der Sendepuls kann direkt intern eingespeist werden und ist daher wenig Änderungen unterworfen. Die Signalamplitude des Empfangspulses dagegen hängt von der einzelnen Messung ab, beispielsweise dem Remissionsvermögen des jeweils remittierenden Objekts und der Entfernung. Diese Effekte werden vorzugsweise durch Normierung beseitigt. Außerdem wird die Überlagerung durch die Normierung zu einem Puls doppelter Amplitude und ist besonders einfach zu erkennen, da beispielsweise die erforderliche Lage einer Schwelle sehr einfach gefunden werden kann.

Die Laufzeitmesseinheit ist bevorzugt dafür ausgebildet, die Amplituden an den Knotenpunkten mit einem Schwellenwert entsprechend der Amplitude von Sendepuls oder Empfangspuls zu vergleichen. Die Überlagerung führt zu einer größeren Amplitude. Mit einem Schwellenwert, der oberhalb der Amplitude der einzelnen Pulse liegt, kann daher zwischen Sende- und Empfangspuls einerseits und der Überlagerung andererseits unterschieden werden. Der Schwellenwert orientiert sich vorzugsweise an dem stärkeren der beiden Pulse, wobei ohnehin vorzugsweise Sendepuls und Empfangspuls beim Einspeisen auf eine gleiche Amplitude gebracht werden.

Mit den Knotenpunkten ist vorzugsweise jeweils eine Diode verbunden, die nur ein Signal mit einer Amplitude mindestens gleich dem Schwellenwert passieren lässt. So kann mit sehr einfachen Schaltungselementen dafür gesorgt werden, dass nur die Überlagerung für die weitere Auswertung berücksichtigt wird. Jeweils allein werden Sendepuls und Empfangspuls von der Diode nicht durchgelassen. Alternativ ist eine Schwellenbewertung mit einem anderen Schaltungselement wie einem Komparator denkbar.

Mit den Knotenpunkten ist vorzugsweise ein Speicherelement oder Integrationsglied zum Erfassen einer Überlagerung von Sendepuls und Empfangspuls verbunden. Das Speicherelement, insbesondere in Form eines Kondensators, speichert den Überlagerungspuls zwischen. Nachgelagert wird dann festgestellt, an welchem Knotenpunkt das Speicherelement einen Überlagerungspuls erfasst hat, und möglicherweise auch mit welcher Amplitude. Vorzugsweise ist das Speicherelement nur indirekt über den schon angesprochenen Schwellenwertvergleich beziehungsweise die Diode mit dem Knotenpunkt verbunden, so dass nur die Überlagerung überhaupt an einem Speicherelement ankommt. Das Speicherelement wird nach einer Messung wieder gelöscht, beispielsweise durch einen parallelen Widerstand, über den die Ladung wieder abfließt.

Die Laufzeitmesseinheit ist bevorzugt für mindestens eine Messwiederholung und gemeinsame Auswertung der Messwiederholungen ausgebildet. Die gemeinsame Auswertung kann nachgelagert auf einer digitalen Ebene stattfinden, beispielsweise durch Mittelung von wiederholt gemessenen Laufzeiten. Vorzugsweise wird jedoch schon vor dem Auslesen in den Speicherelementen die Überlagerung aus mehreren Messungen gesammelt und dann gemeinsam ausgelesen und ausgewertet.

Die Laufzeitmesseinheit ist bevorzugt dafür ausgebildet, die Laufzeit aus der Position des Knotenpunkts innerhalb der Verzögerungsleitung zu bestimmen, an dem es zu einer Überlagerung von Sendepuls und Empfangspuls kommt. Das ist eine Art gerasterte oder digitale Bewertung mit einer Zeitauflösung, die der Verzögerung der einzelnen Verzögerungselemente entspricht. Es ist denkbar, dass an mehreren benachbarten Knotenpunkten eine Überlagerung registriert wurde, und dann wird beispielsweise deren zeitliche Mitte als Maß für die gesuchte Laufzeit verwendet.

Die Laufzeitmesseinheit ist bevorzugt dafür ausgebildet, die Laufzeit durch einen Vergleich der Amplituden an mehreren Knotenpunkten zu bestimmen, an denen es zu einer Überlagerung von Sendepuls und Empfangspuls kommt. Das ermöglicht eine noch genauere Zeitmessung mit Auflösung besser als die Verzögerung eines Verzögerungselements. Die Gewichtung der Amplituden bestimmt die jeweiligen Bruchteile, zu denen die Überlagerung noch in dem einen und schon in dem anderen Verzögerungselement stattgefunden hat. Dazu ist nicht nur wie bei der im Vorabsatz erläuterten digitalen Bewertung erforderlich, die Knotenpunkte zu identifizieren, in denen eine Überlagerung stattgefunden hat. Zusätzlich muss auch die Amplitude bestimmt werden, beispielsweise durch A/D-Wandlung.

Der Sendepuls ist bevorzugt breiter als die Verzögerung eines Verzögerungselements. Das gilt dann automatisch auch für den Empfangspuls, der im Kern ein Echo des Sendepulses ist. Durch ausreichende Pulsbreite ist der Fall ausgeschlossen, dass Sendepuls und Empfangspuls einander vollständig innerhalb eines Verzögerungselements begegnen und an keinem Knotenpunkt registriert werden. Außerdem erleichtert und verbessert ein breiterer Sendepuls die soeben erläuterte Auflösungserhöhung durch Vergleich der Amplituden an den von der Überlagerung betroffenen Knotenpunkten. Ein Teil der steigenden und fallenden Flanke des Sendepulses kann zu der Breite gezählt werden, nämlich soweit Amplitude der Flanke hoch genug ist, um eine erfassbare Überlagerung zu erzeugen.

Die Laufzeitmesseinheit weist bevorzugt eine Grobmesseinheit zur Bestimmung der Laufzeit in groben Schritten auf, insbesondere einen Zähler, und führt mit der Verzögerungsleitung eine Feinmessung für eine Bestimmung der Laufzeit zwischen den groben Schritten durch. Dann genügt eine wesentlich kürzere Verzögerungsleitung, die nur noch einen Takt des Zählers abdecken muss. Beispielsweise wird mit jedem Zählertakt ein Sendepuls in die Verzögerungsleitung eingeschleust. Das wird solange keine Überlagerung erzeugen, bis der Empfangspuls eintrifft und damit in diesem Takt die Feinmessung ermöglicht.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Sensors zur Entfernungsmessung mit einem Laufzeitverfahren;
- Fig. 2: eine schematische Darstellung einer Verzögerungsleitung zur Bestimmung einer Laufzeit;
- Fig. 3: eine Darstellung von in der Verzögerungsleitung von beiden Seiten aufeinander zu propagierenden Sende- und Empfangspulsen;
- Fig. 4: eine Darstellung der Signalamplituden in der Verzögerungsleitung, vergleichend für die Stellen, an denen Sendepuls und Empfangspuls eingespeist werden und wo sie einander überlagern;
- Fig. 5: eine Blockdarstellung einer Bewertungsstruktur für die Überlagerung von Sendepuls und Empfangspuls an den Knotenpunkten der Verzögerungsleitung;
- Fig. 6: eine konkretisierte beispielhafte Schaltung für eine Bewertungsstruktur gemäß Figur 5; und
- Fig. 7: eine Darstellung der Signalamplituden ähnlich Figur 4, nun mit breiteren Pulsen und deshalb einer unterschiedlich starken Überlagerung an benachbarten Knotenpunkten.

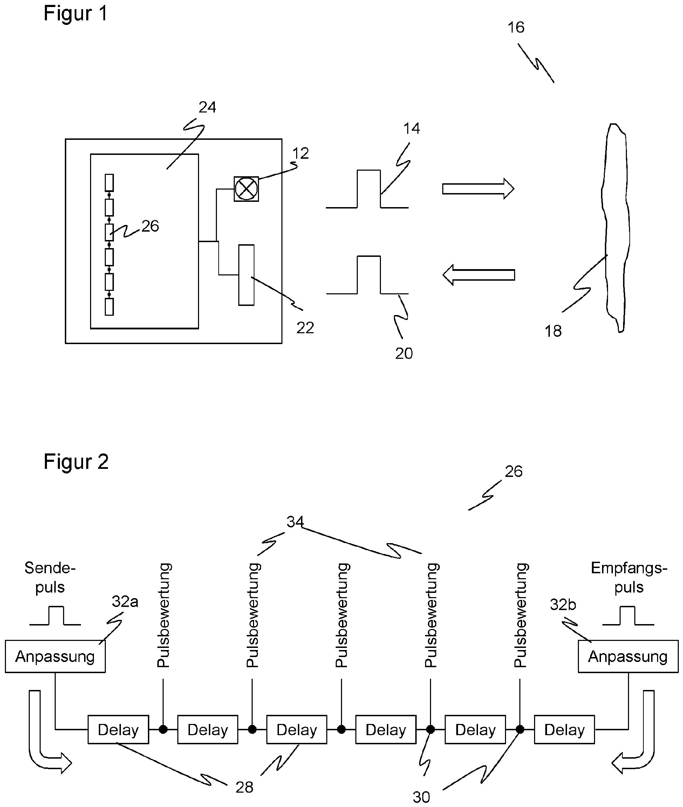

Figur 1 zeigt eine schematische Darstellung eines entfernungsmessenden Sensors 10 in einer Ausführungsform als eindimensionaler optoelektronischer Entfernungstaster. Ein Lichtsender 12, beispielsweise eine LED oder eine Laserlichtquelle, sendet einen Lichtpuls 14 in einen Überwachungsbereich 16 aus. Auslöser für den Lichtpuls 14 ist ein nicht gezeigter elektronischer Sendepuls. Trifft der Lichtpuls 14 auf ein Objekt 18, so wird ein Teil des Lichtpulses 14 remittiert oder reflektiert und kehrt als remittierter Lichtpuls 20 zu einem Lichtempfänger 22 zurück. Dort wird ein ebenfalls nicht gezeigter elektronischer Empfangspuls erzeugt. Der Sensor 10 weist in einer praktischen Ausführungsform weitere Elemente auf, insbesondere Sende- und Empfangsoptiken und Anschlüsse, auf die hier vereinfachend nicht eingegangen wird

Eine Laufzeitmesseinheit 24 steuert den Lichtsender 12 mit dem Sendepuls an und wertet den Empfangspuls des Lichtempfängers 22 aus. Für eine Entfernungsmessung zu dem Objekt 18 wird die Laufzeit zwischen Sendepuls und Empfangspuls mit Hilfe einer Verzögerungsleitung 26 gemessen. Das wird später unter Bezugnahme auf die Figuren 2 bis 7 näher erläutert. Denkbar ist auch, die Laufzeit durch einen Zähler in ganzen Takten eines Referenztaktes zu messen und die Verzögerungsleitung 26 für eine Feinmessung innerhalb eines Taktes zu verwenden. Konstante Anteile der gemessenen Laufzeit durch interne Signallaufzeiten und dergleichen können durch eine Referenzmessung oder Kalibration, auch unter Berücksichtigung einer aktuellen Temperatur, kompensiert werden. Die eventuell entsprechend bereinigte Laufzeit entspricht der gesuchten Entfernung des Objekts 18, wobei der Skalierungsfaktor die halbe Lichtgeschwindigkeit ist. Die Halbierung berücksichtigt den Hin- und Rückweg des Lichtpulses 14, 20.

Der in Figur 1 gezeigte eindimensionale optoelektronische Entfernungstaster ist nur eine Ausführungsform eines erfindungsgemäßen Sensors 10. Beispielsweise kann der Sensor 10 koaxial aufgebaut sein, ein mehrdimensionales System sein, wie ein Laserscanner oder eine 3D-Lichtlaufzeitkamera, oder mit gänzlich anderen elektromagnetischen Signalen arbeiten, wie ein TDR-Füllstandsensor oder ein Radar. Im Prinzip sind auch nicht elektromagnetische Signale wie Ultraschall vorstellbar, wobei dann statt der Lichtgeschwindigkeit die Schallgeschwindigkeit zugrunde zu legen ist und sich das Problem der extrem schnellen Zeitmessung dadurch relativiert.

Figur 2 ist eine schematische Darstellung der Verzögerungsleitung 26. Im Kern handelt es sich um eine Reihenschaltung einer Vielzahl von Verzögerungselementen 28, wobei der jeweilige Übergang als Knotenpunkt 30 zwischen zwei Verzögerungselementen 28 bezeichnet wird. Im Folgenden wird beispielhaft angenommen, dass die Verzögerungselemente 28 untereinander baugleich sind oder zumindest jeweils eine gleiche Verzögerung von beispielsweise 200 ps bewirken. Der Zahlenwert kann variiert werden und stellt eine grundlegende Zeitauflösung der Laufzeitmessung dar, die aber durch noch vorzustellende Maßnahmen noch verfeinert werden kann. Eine kürzere Verzögerung bedeutet eine insgesamt längere Verzögerungsleitungen 26 mit mehr Verzögerungselementen 28, oder alternativ weniger Reichweite der Laufzeitmessung, so dass diese Anforderungen gegeneinander abgewogen werden müssen.

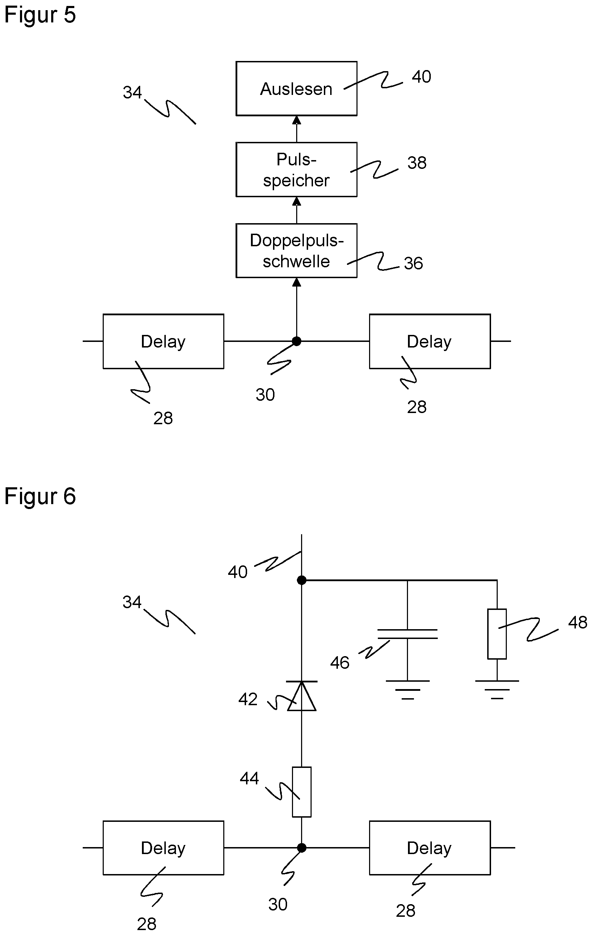

An den beiden Enden der Verzögerungsleitung 26 werden jeweils der Sendepuls und mit dessen Eintreffen der Empfangspuls eingespeist. Dort ist eine Anpassung 32a-b vorgesehen, um die Pulse an die Impedanz von beispielsweise 50 Ohm anzupassen. Die Anpassung 32a-b kann aus einfachen Widerständen bestehen. Vorzugsweise findet zugleich eine Normierung statt, mit der die Amplitude von Sendepuls und Empfangspuls auf einen gleichen Wert gebracht wird. An den Knotenpunkten 30 ist jeweils eine Pulsbewertung 34 vorgesehen, deren mögliche Ausgestaltung weiter unten anhand der Figuren 5 und 6 noch näher erläutert wird.

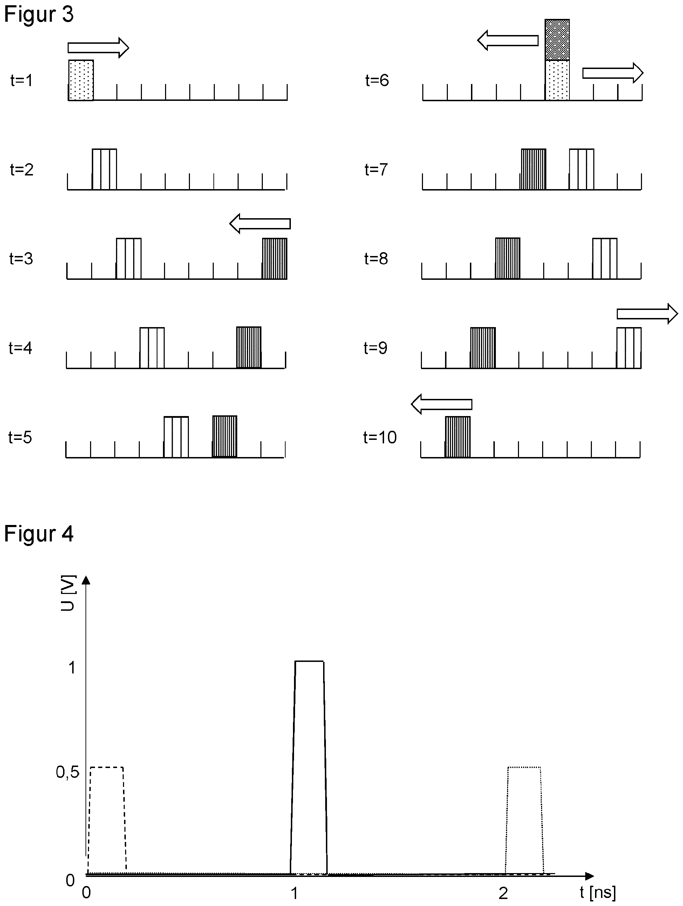

Figur 3 illustriert die Zeitmessung in der Verzögerungsleitung 26. Zu verschiedenen Zeitpunkten t=1, ..., 10 wird die Position des hell schraffierten Sendepulses und des dunkel schraffierten Empfangspulses gezeigt, wobei die Skalenteilungen jeweils für einen Knotenpunkt 30 stehen. Die Zeitschritte t sind als Vielfaches der Verzögerung eines Verzögerungselements 28 angegeben. Mit Pfeilen ist an mehreren Stellen die gegensätzliche Laufrichtung der von beiden Seiten eingespeisten Pulse angegeben.

Mit Beginn der Zeitmessung zur Zeit t=1 wird der Sendepuls am linken Ende der Verzögerungsleitung 26 eingespeist und läuft dann mit jedem Zeitschritt einen Knotenpunkt 30 weiter. Zum Zeitpunkt t=3 ist der Empfangspuls angekommen und wird von der rechten Seite her eingespeist, so dass die beiden Pulse in der Verzögerungsleitung 26 aufeinander zulaufen. Bei t=6 treffen sie aufeinander, so dass sich hier ihre Amplitude addieren. Unter der Voraussetzung gleicher Amplituden von Sendepuls und Empfangspuls hat diese Überlagerung eine doppelte Amplitude. Ansonsten ist sie jedenfalls größer als die größere der beiden einzelnen Amplituden, und an diesem Kriterium kann die Zeit t=6 bestimmt werden. In den weiteren Zeitschritten nach t=6 wandern die Pulse auseinander, was aber für die Zeitmessung nicht mehr von Belang ist, da nirgends mehr eine Überlagerung mit vergrößerter Amplitude auftritt.

Figur 4 stellt die Situation noch einmal auf eine alternativen Weise dar, nämlich als zeitlichen Spannungsverlauf an mehreren Stellen in der Verzögerungsleitung 26: mit gestrichelter Linie am ersten Knotenpunkt 30, wo der Sendepuls eingespeist wird, mit gepunkteter Linie am letzten Kontenpunkt 30, wo der Empfangspuls eingespeist wird, und mit durchgezogener Linie an dem Knotenpunkt 30, wo die Überlagerung von Sendepuls und Empfangspuls stattfindet. Zur Vereinfachung sind hier die Pulsbreiten gerade entsprechend der Verzögerung eines Verzögerungselements 28 gewählt, hier bei 200 ps. Durch die Flanken ist die effektive Pulsbreite noch etwas größer. Außerdem werden Sende- und Empfangspuls gleichzeitig eingespeist, was nur der Illustration dient, denn in einer realen Messung wird der Empfangspuls wie in Figur 3 später und je nach Laufzeit sogar wesentlich später als in Figur 3 eintreffen.

Der Knotenpunkt 30, an dem die Überlagerung stattfindet, ist natürlich bei einer realen Zeitmessung nicht vorab bekannt, sondern vielmehr ist das Ziel der Messung, diesen Knotenpunkt 30 zu identifizieren. Aufgrund der erhöhten, bei normierten Pulsen verdoppelten Amplitude bei der Überlagerung ist das leicht möglich. Wenn sich wie in Figur 4 die Pulse in der Mitte treffen, gab es keine Laufzeitdifferenz. Je später der Empfangspuls eintrifft, umso weiter kann der Sendepuls bis zur Überlagerung laufen, so dass die Lage des Knotenpunkts 30 der Überlagerung innerhalb der Verzögerungsleitung proportional zur Laufzeit wird.

Figur 5 zeigt eine Ausführungsform der Pulsbewertung 34 an den Knotenpunkten 30 mit Funktionsblöcken. Eine solche Pulsbewertung 34 ist vorzugsweise an allen Knotenpunkten 30 vorgesehen. Andererseits ist auch vorstellbar, sie zur Vereinfachung an einigen Knotenpunkten 30 wegzulassen, insbesondere in der linken Hälfte der Verzögerungsleitung 26, wo der Sendepuls eingespeist wird. Die Überlagerung kann frühestens in der Mitte stattfinden, wenn positive Laufzeiten gemessen werden. Eine negative Laufzeit ist aber nicht physikalisch unmöglich, wie es auf den ersten Blick scheint, sondern kann durch Effekte wie zusätzliche äußere Verzögerungen des Sendepulses insbesondere bei Einsatz der Verzögerungsleitung 26 nur für eine Feinmessung vorkommen.

In der Pulsbewertung 34 findet zunächst ein Schwellenwertvergleich 36 mit einem Schwellenwert statt, der die Überlagerung von Sende- und Empfangspuls von den einfachen Pulsen unterscheidet. Der Schwellenwert liegt oberhalb der höheren einzelnen Amplitude von Sende- und Empfangspuls. Sofern beide Pulse eine gleiche Amplitude aufweisen, wird ein Schwellenwert zwischen dem einfachen und doppelten dieser Amplitude gewählt, beispielweise bei der eineinhalbfachen Amplitude.

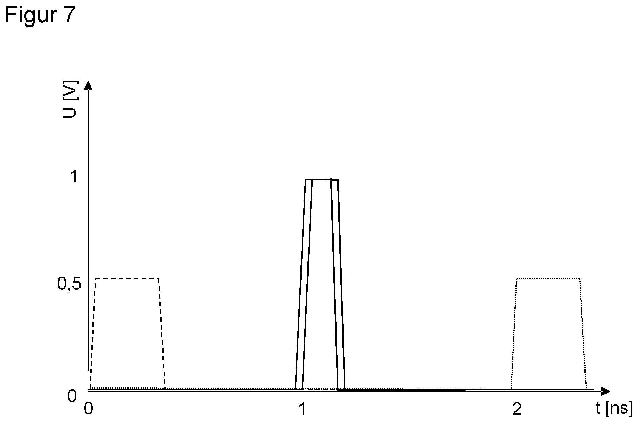

Nur die Überlagerung wird diesen Schwellenwertvergleich 36 überwinden und in einem Pulsspeicher 38 zwischengespeichert. Dadurch kann das Auslesen 40 nachgelagert zu einem späteren Zeitpunkt erfolgen. Der Pulsspeicher 38 kann binär sein, also lediglich vermerken, ob eine Überlagerung registriert wurde oder nicht. Dann entsteht als effektives Messsignal über alle Knotenpunkte 30 in der Situation der Figur 3 ein Ergebnis wie 0000010000, wobei die Eins an sechster Stelle bedeutet, dass es beim sechsten Knotenpunkt 30 entsprechend t=6 zu der Überlagerung gekommen ist. Sind die Pulse im Vergleich zur Verzögerung eines einzelnen Verzögerungselements 28 breiter, so kann es mehrere Einsen nebeneinander geben, von denen dann beispielsweise die zeitliche Mitte der Zeitmessung zu Grunde gelegt wird. Alternativ misst der Pulsspeicher 38 die Amplitude als Zahlenwert. Das ermöglicht dann auch eine Messung mit einer Zeitauflösung besser als die einzelne Verzögerung eines Verzögerungselements 28, wie später zu Figur 7 noch erläutert.

Figur 6 zeigt eine mögliche konkrete Schaltung für die Pulsbewertung 34 gemäß Figur 5. Die Diode 42 lässt nur Spannungen oberhalb des Schwellenwerts für eine Überlagerung von Sendepuls und Empfangspuls durch und ist folglich eine Realisierung des Schwellenwertvergleichs 36. Während einer Überlagerung wird mit dem Diodenstrom über einen Widerstand 44 ein Kondensator 46 als Pulsspeicher 38 geladen. Das Auslesen 40 kann dann später durch eine Gleichspannungsmessung erfolgen. Dabei kann lediglich binär festgestellt werden, ob der Kondensator 46 überhaupt geladen ist, oder der Ladungszustand kann über einen A/D-Wandler als Zahlenwert bestimmt werden. Der parallele Widerstand 48 dient dazu, dass die Spannung über einen bestimmten Zeitraum für eine neue Zeitmessung wieder abgebaut wird.

Treffen sich also Sendepuls und Empfangspuls an einem Knotenpunkt 30, so wird durch die Überlagerung die Diodenschwelle der Diode 42 der zugehörigen Pulsbewertung 34 überschritten und deren Kondensator 46 geladen. Die Laufzeitmessung kann auch wiederholt werden, dann wirkt der Kondensator 46 als Integrator. Mit jeder Messwiederholung wird der ausgelesene Spannungswert an dem Kondensator 46 höher. Dadurch sind Mittelungen und andere gemeinsame Auswertungen mehrerer Zeitmessungen möglich.

Die Schaltung gemäß Figur 6 ist beispielhaft zu verstehen. Insbesondere sind Modifikationen ein Vertauschen von Diode 42 und Widerstand 44 denkbar. Die Verzögerungsleitung 26 samt den Pulsbewertungen 34 kann als integrierte Lösung aufgebaut sein.

Allein durch die Identifizierung des Knotenpunktes 30, in dem es zu einer Überlagerung kommt, ist eine Zeitauflösung entsprechend der einzelnen Verzögerung eines Verzögerungselements 28 möglich. Mit den bisherigen beispielhaften Zahlenwerten von zehn Verzögerungselementen 28 zu je 200 ps wird insgesamt eine Zeitspanne von 2 ns erfassbar. Das entspricht einer Reichweite von 30 cm bei 3 cm Messauflösung. Die Reichweite lässt sich durch mehr Verzögerungselemente 28, die Messauflösung durch kürzere einzelne Verzögerungen der Verzögerungselemente 28 verbessern. Das erfordert aber auch entsprechend größere Schaltungen.

Die Messauflösung kann jedoch auch verbessert werden, ohne die einzelnen Verzögerungen zu verfeinern. Dafür wird die Überlagerung zwischen Knotenpunkten 30 lokalisiert. Um eine Überlagerung in zumindest zwei benachbarten Knotenpunkten 30 registrierte Überlagerung zu erhalten, wird eine im Vergleich zu der einzelnen Verzögerung größere Pulsbreite gewählt. Dann kann zwischen den Knotenpunkten 30 anhand der gemessenen Amplitude der Überlagerung interpoliert werden.

Figur 7 illustriert diese Interpolation in einer Darstellung ähnlich Figur 4, nun aber mit doppelt so breitem Sende- und Empfangspuls und einer leichten Verzögerung des Empfangspulses kleiner der einzelnen Verzögerung eines Verzögerungselements 28 von hier 200 ps. Dadurch entstehen an zwei benachbarten Knotenpunkten 30 Überlagerungen, wie in Figur 7 in der Mitte dargestellt, die sich in ihrer Breite unterscheiden, mit zu der Verzögerung proportionalem Breitenunterschied.

Die Pulsspeicher 38 an den zwei benachbarten Knotenpunkten 30, an denen es zu der Überlagerung kommt, werden aufgrund der leichten Verzögerung nicht ganz gleich lang aufgeladen. Folglich ergibt sich an den Pulsspeichern dieser beiden Knotenpunkte 30 ein Amplituden- beziehungsweise Spannungsunterschied, wiederum proportional zur Verzögerung.

Die Messgenauigkeit wird daher nicht mehr von der granularen einzelnen Verzögerung bestimmt, wie 200 ps, sondern von der Genauigkeit, mit der die Amplituden gemessen werden können. Die Genauigkeit kann durch Messwiederholungen und auch ein Verbreitern der Pulse verbessert werden. Wird durch Interpolation, ob mit oder ohne die genannten zusätzlichen Maßnahmen, eine zeitliche Auflösung von nun 2 ps statt zuvor 200 ps erreicht, so ist nun mit den zehn beispielhaften Verzögerungselementen 28 bei einer Reichweite von 30 cm eine Auflösung von 300 µm möglich.

Bei großen Reichweiten beziehungsweise langen Laufzeiten und damit benötigten Verzögerungen werden die benötigten Strukturen immer größer. Durch Mäanderstrukturen und dergleichen ist zwar eine kompakte Auslegung möglich, aber dennoch ist der Sensor 10 zunächst vor allem für kurze Reichweiten im Bereich einiger Meter einsetzbar. Durch Kombination mit einem Zähler, der den Großteil der Laufzeit mit einer vergleichsweise groben Auflösung im Bereich von Nanosekunden misst, wird die Reichweite aber praktisch beliebig erhöht. Die Verzögerungsleitung 26 dient dann als Feinmesseinheit oder Interpolator für die fein zu bestimmende Laufzeitkomponente zwischen zwei Takten des Zählers.

## Patentansprüche

1. Sensor (10) zur Bestimmung einer Entfernung nach einem pulsbasierten Laufzeitverfahren, mit einem Sender (12) zum Aussenden eines durch einen Sendepuls ausgelösten Signalpulses (14), einem Empfänger (22) zum Erzeugen eines Empfangspulses aus dem remittierten Signalpuls (20) sowie einer Laufzeitmesseinheit (24) zur Bestimmung einer Laufzeit aus Sendepuls und Empfangspuls, die eine Verzögerungsleitung (26) mit einer Vielzahl von in Reihe geschalteten Verzögerungselementen (28) und Knotenpunkten (30) zwischen den Verzögerungselementen (28) aufweist,
**dadurch gekennzeichnet,**
**dass** die Laufzeitmesseinheit (24) dafür ausgebildet ist, den Sendepuls an einem Ende (32a) und den Empfangspuls an dem anderen Ende (32b) in die Verzögerungsleitung einzuspeisen und die Laufzeit aus dem mindestens einen Knotenpunkt (30) mit einer Amplitude entsprechend einer Überlagerung von Sendepuls und Empfangspuls zu bestimmen.

2. Sensor (10) nach Anspruch 1,
der als optoelektronischer Sensor ausgebildet ist, wobei der Sender (12) ein Lichtsender, der Empfänger (22) ein Lichtempfänger und der Signalpuls (14, 20) ein Lichtpuls ist.

3. Sensor (10) nach Anspruch 1 oder 2,
wobei die Laufzeitmesseinheit (24) dafür ausgebildet ist, Sendepuls und Empfangspuls auf eine gleiche Amplitude zu normieren

4. Sensor (10) nach einem der vorhergehenden Ansprüche,
wobei die Laufzeitmesseinheit (24) dafür ausgebildet ist, die Amplituden an den Knotenpunkten (30) mit einem Schwellenwert entsprechend der Amplitude von Sendepuls oder Empfangspuls zu vergleichen.

5. Sensor (10) nach Anspruch 4,
wobei mit den Knotenpunkten (30) jeweils eine Diode (42) verbunden ist, die nur ein Signal mit einer Amplitude mindestens gleich dem Schwellenwert passieren lässt.

6. Sensor (10) nach einem der vorhergehenden Ansprüche,
wobei mit den Knotenpunkten (30) ein Speicherelement (38, 46) zum Erfassen einer Überlagerung von Sendepuls und Empfangspuls verbunden ist.

7. Sensor (10) nach einem der vorhergehenden Ansprüche,
wobei die Laufzeitmesseinheit (24) für mindestens eine Messwiederholung und gemeinsame Auswertung der Messwiederholungen ausgebildet ist.

8. Sensor (10) nach einem der vorhergehenden Ansprüche,
wobei die Laufzeitmesseinheit (24) dafür ausgebildet ist, die Laufzeit aus der Position des Knotenpunkts (30) innerhalb der Verzögerungsleitung (26) zu bestimmen, an dem es zu einer Überlagerung von Sendepuls und Empfangspuls kommt.

9. Sensor (10) nach einem der vorhergehenden Ansprüche,
wobei die Laufzeitmesseinheit (24) dafür ausgebildet ist, die Laufzeit durch einen Vergleich der Amplituden an mehreren Knotenpunkten (30) zu bestimmen, an denen es zu einer Überlagerung von Sendepuls und Empfangspuls kommt.

10. Sensor (10) nach einem der vorhergehenden Ansprüche,
wobei der Sendepuls breiter ist als die Verzögerung eines Verzögerungselements (28).

11. Sensor (10) nach einem der vorhergehenden Ansprüche,
wobei die Laufzeitmesseinheit (24) eine Grobmesseinheit zur Bestimmung der Laufzeit in groben Schritten aufweist, insbesondere einen Zähler, und mit der Verzögerungsleitung (26) eine Feinmessung für eine Bestimmung der Laufzeit zwischen den groben Schritten durchführt.

12. Verfahren zur Bestimmung einer Entfernung nach einem pulsbasierten Laufzeitverfahren, bei dem ausgelöst durch einen Sendepuls ein Signalpuls (14) ausgesandt und aus dem wieder empfangenen Signalpuls (20) ein Empfangspuls erzeugt wird, wobei mit einer Verzögerungsleitung (26) mit einer Vielzahl von in Reihe geschalteten Verzögerungselementen (28) und Knotenpunkten (30) zwischen den Verzögerungselementen (28) eine Laufzeit aus Sendepuls und Empfangspuls bestimmt wird,
**dadurch gekennzeichnet,**
**dass** der Sendepuls an einem Ende (32a) und der Empfangspuls an dem anderen Ende (32b) in die Verzögerungsleitung (26) eingespeist und die Laufzeit aus dem mindestens einen Knotenpunkt (30) mit einer Amplitude entsprechend einer Überlagerung von Sendepuls und Empfangspuls bestimmt wird.

## Claims

1. A sensor (10) for determining a distance according to a pulse-based time-of-flight method, having a transmitter (12) for transmitting a signal pulse (14) triggered by a transmission pulse, a receiver (22) for generating a reception pulse from the remitted signal pulse (20), and a time of flight measuring unit (24) for determining a time of flight from the transmission pulse and the reception pulse, which time of flight measuring unit (24) comprises a delay line (26) with a plurality of delay elements (28) connected in series and nodes (30) between the delay elements (28),
**characterized in that** the time of flight measuring unit (24) is configured to feed the transmission pulse into the delay line at one end (32a) and to feed the reception pulse into the delay line at the other end (32b) and to determine the time of flight from the at least one node (30) having an amplitude corresponding to a superposition of the transmission pulse and the reception pulse.

2. The sensor (10) according to claim 1,
that is configured as an optoelectronic sensor, wherein the transmitter (12) is a light transmitter, the receiver (22) is a light receiver and the signal pulse (14, 20) is a light pulse.

3. The sensor (10) according to claim 1 or 2,
wherein the time of flight measuring unit (24) is configured to normalize the transmission pulse and the reception pulse to the same amplitude.

4. The sensor (10) according to any of the preceding claims,
wherein the time of flight measuring unit (24) is configured to compare the amplitudes at the nodes (30) with a threshold value corresponding to the amplitude of the transmission pulse or reception pulse.

5. Sensor (10) according to claim 4,
wherein a diode (42) is connected to each of the nodes (30), which diode (42) only allows a signal with an amplitude at least equal to the threshold value to pass.

6. The sensor (10) according to any of the preceding claims,
wherein a memory element (38, 46) for detecting a superposition of transmission pulse and reception pulse is connected to the nodes (30).

7. The sensor (10) according to any of the preceding claims,
wherein the time of flight measuring unit (24) is configured for at least one measurement repetition and joint evaluation of the measurement repetitions.

8. The sensor (10) according to any of the preceding claims,
wherein the time of flight measuring unit (24) is configured to determine the time of flight from the position of the node (30) within the delay line (26) at which superposition of the transmission pulse and the reception pulse occurs.

9. The sensor (10) according to any of the preceding claims,
wherein the time of flight measuring unit (24) is configured to determine the time of flight by comparing the amplitudes at a plurality of nodes (30) at which a superposition of transmission pulse and reception pulse occurs.

10. The sensor (10) according to any of the preceding claims,
wherein the transmission pulse is wider than the delay of a delay element (28).

11. The sensor (10) according to any of the preceding claims,
wherein the time of flight measuring unit (24) comprises a coarse measuring unit for determining the time of flight in coarse steps, in particular a counter, and performs a fine measurement with the delay line (26) for determining the time of flight between the coarse steps.

12. A method for determining a distance according to a pulse-based time of flight method, wherein a signal pulse (14) is transmitted, triggered by a transmission pulse, and a reception pulse is generated from the signal pulse (20) received again, a time of flight being determined from the transmission pulse and the reception pulse by means of a delay line (26) having a plurality of delay elements (28) connected in series and nodes (30) between the delay elements (28),
**characterized in that** the transmission pulse is fed into the delay line (26) at one end (32a) and the reception pulse is fed into the delay line (26) at the other end (32b), and the time of flight is determined from the at least one node (30) having an amplitude corresponding to a superposition of the transmission pulse and the reception pulse.

## Revendications

1. Capteur (10) pour déterminer une distance selon un procédé de temps de parcours basé sur des impulsions, comprenant un émetteur (12) pour émettre une impulsion de signal (14) déclenchée par une impulsion d'émission, un récepteur (22) pour générer une impulsion de réception à partir de l'impulsion de signal renvoyée (20), et une unité de mesure du temps de parcours (24) destinée à déterminer un temps de parcours à partir de l'impulsion d'émission et de l'impulsion de réception et présentant une ligne à retard (26) ayant une pluralité d'éléments de retard (28) montés en série et de noeuds (30) entre les éléments de retard (28),
**caractérisé en ce que**
l'unité de mesure du temps de parcours (24) est réalisée pour injecter dans la ligne à retard l'impulsion d'émission à une extrémité (32a) et l'impulsion de réception à l'autre extrémité (32b) et pour déterminer le temps de parcours à partir dudit au moins un nœud (30) avec une amplitude correspondant à une superposition de l'impulsion d'émission et de l'impulsion de réception.

2. Capteur (10) selon la revendication 1,
qui est réalisé sous forme de capteur optoélectronique, l'émetteur (12) étant un émetteur de lumière, le récepteur (22) étant un récepteur de lumière et l'impulsion de signal (14, 20) étant une impulsion lumineuse.

3. Capteur (10) selon la revendication 1 ou 2,
dans lequel l'unité de mesure du temps de parcours (24) est réalisée pour normaliser l'impulsion d'émission et l'impulsion de réception à la même amplitude.

4. Capteur (10) selon l'une des revendications précédentes,
dans lequel l'unité de mesure du temps de parcours (24) est réalisée pour comparer les amplitudes aux nœuds (30) avec une valeur de seuil correspondant à l'amplitude de l'impulsion d'émission ou de l'impulsion de réception.

5. Capteur (10) de la revendication 4,
dans lequel une diode respective (42) est connectée à chacun des nœuds (30) pour ne laisser passer qu'un signal ayant une amplitude au moins égale à la valeur de seuil.

6. Capteur (10) selon l'une des revendications précédentes,
dans lequel un élément de mémoire (38, 46) est connecté aux nœuds (30) pour détecter une superposition de l'impulsion d'émission et de l'impulsion de réception.

7. Capteur (10) selon l'une des revendications précédentes,
dans lequel l'unité de mesure du temps de parcours (24) est réalisée pour au moins une répétition de mesure et une évaluation commune des répétitions de mesure.

8. Capteur (10) selon l'une des revendications précédentes,
dans lequel l'unité de mesure du temps de parcours (24) est réalisée pour déterminer le temps de parcours à partir de la position du nœud (30) au sein de la ligne à retard (26) auquel une superposition de l'impulsion d'émission et de l'impulsion de réception se produit.

9. Capteur (10) selon l'une des revendications précédentes,
dans lequel l'unité de mesure du temps de parcours (24) est réalisée pour déterminer le temps de parcours en comparant les amplitudes au niveau de plusieurs nœuds (30) auxquels une superposition de l'impulsion d'émission et de l'impulsion de réception se produit.

10. Capteur (10) selon l'une des revendications précédentes,
dans lequel l'impulsion d'émission est plus large que le retard d'un élément de retard (28).

11. Capteur (10) selon l'une des revendications précédentes,
dans lequel l'unité de mesure du temps de parcours (24) comprend une unité de mesure grossière pour déterminer le temps de parcours en étapes grossières, en particulier un compteur, et effectue une mesure fine avec la ligne à retard (26) pour déterminer le temps de parcours entre les étapes grossières.

12. Procédé pour déterminer une distance selon un procédé de temps de parcours basé sur des impulsions, dans lequel une impulsion de signal (14) est émise en étant déclenchée par une impulsion d'émission et une impulsion de réception est générée à partir de l'impulsion de signal reçue (20), un temps de parcours étant déterminé à partir de l'impulsion d'émission et de l'impulsion de réception au moyen d'une ligne à retard (26) ayant une pluralité d'éléments de retard (28) montés en série et de nœuds (30) entre les éléments de retard (28),
**caractérisé en ce que**
l'impulsion d'émission est injectée dans la ligne à retard (26) à une extrémité (32a) et l'impulsion de réception est injectée à l'autre extrémité (32b), et le temps de parcours est déterminé à partir dudit au moins un nœud (30) avec une amplitude correspondant à une superposition de l'impulsion d'émission et de l'impulsion de réception.
